Europäisches Patentamt

European Patent Office

Office européen des brevets

(11) Publication number: **0 049 626**
**B1**

## EUROPEAN PATENT SPECIFICATION

(45) Date of publication of patent specification: **11.03.87**

(21) Application number: **81304590.3**

(22) Date of filing: **05.10.81**

(51) Int. Cl.⁴: **G 05 D 23/19,** F 23 N 5/20,
G 04 G 15/00

(54) Temperature control system.

(30) Priority: **06.10.80 US 194210**

(43) Date of publication of application:
**14.04.82 Bulletin 82/15**

(45) Publication of the grant of the patent:
**11.03.87 Bulletin 87/11**

(84) Designated Contracting States:
**CH DE FR GB LI NL**

(56) References cited:
**DE-A-2 841 334**
**DE-A-2 900 845**
**US-A-3 964 677**
**US-A-3 979 060**
**US-A-4 035 661**
**US-A-4 079 366**
**US-A-4 154 397**

(73) Proprietor: **HONEYWELL INC.**
**Honeywell Plaza**
**Minneapolis Minnesota 55408 (US)**

(72) Inventor: **Adams, John T.**
**4929 - 28th Avenue South**
**Minneapolis Minnesota 55417 (US)**
Inventor: **Nelson, Marvin D.**
**2480 South Highway 100**
**St. Louis Park Minnesota 55416 (US)**
Inventor: **Kompelien, Arlon D.**
**6329 Thomas Avenue South**
**Richfield Minnesota 55423 (US)**
Inventor: **Pinckaers, B. Hubert**
**6301 Ewing Avenue South**
**Edina Minnesota 55410 (US)**

(74) Representative: **Frohwitter, Bernhard, Dipl.-Ing.**
**et al**
**Bardehle-Pagenberg-Dost-Altenburg & Partner**
**Patent- und Rechtsanwälte Galileiplatz 1**
**Postfach 86 06 20**
**8000 München 80 (DE)**

Courier Press, Leamington Spa, England.

## Description

Clock thermostat apparatus for controlling the temperature in a space at a normal controlled temperature during certain periods of time and reducing the controlled temperature to a lower temperature for heating and a higher temperature for cooling or during other selected periods of time for energy conservation are broadly old.

It is well known to provide programming means of varying degrees of complexity. However, all these means involve the provision of more or less complicated indicating means, either on the thermostat itself or on an associated programmer, and involve more or less difficulty in learning their use.

An example of these known systems is DE—A—2 900 845, which shows a system in which there is a time display, two buttons for setting the time display (clock time), two more buttons for setting a set-up and set-back time into the system (in conjunction with the use of the two-setting buttons), and a button for changing the system during a programmed interval. This system appears relatively simple, but it does involve the use of 5 buttons and a time display.

The object of the present invention is to provide a system which, while nevertheless providing a considerable degree of flexibility in the setting of energy saving (set-back), is of the utmost simplicity, and in particular avoids the need for a time display.

Accordingly the present invention provides a thermostat controller for a temperature control system, comprising a temperature sensor (20, R2), means for setting a desired temperature (13, R1), circuitry (31, A1, 35) responsive to the difference between the actual and desired temperature to control heating or cooling means accordingly, and timer means (35) settable to provide a set-back of the desired temperature for a predetermined daily interval, characterized in that the timer means comprises: a set control button (S, 24) operable to produce a series of pulses which are fed to set-back accumulator means; a 24-hour timer which is reset by the set control button; and means (LED 30) for audibly or visually indicating the number of pulses being stored, when the set control button is pressed.

An energy saving thermostat in accordance with the invention will now be described, by way of example, with reference to the drawings, in which:

Figure 1 is a general diagram of the thermostat, and

Figure 2 is a block diagram of the energy control circuitry.

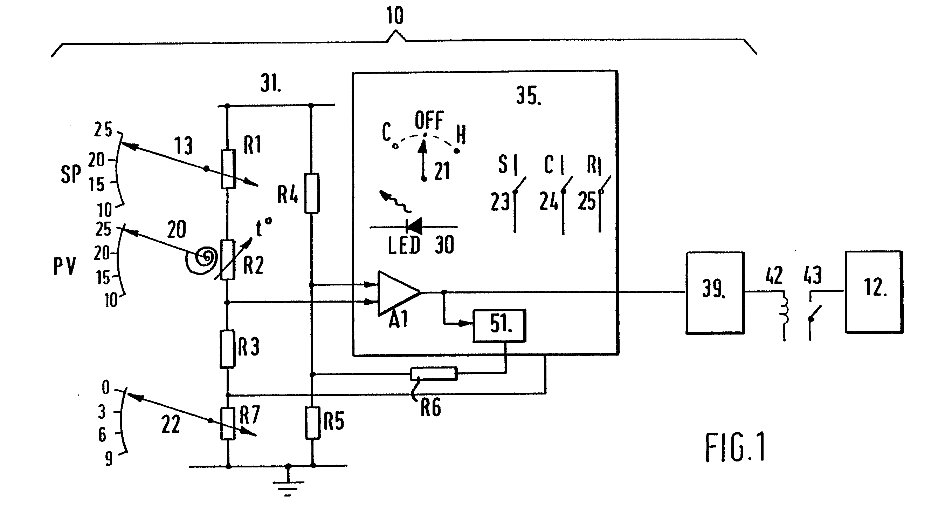

Figure 1 shows the major features of the thermostat. A set-point device 13 is manually adjustable to indicate a desired temperature, and is coupled to a variable resistor R1. A thermometer 20 indicates the actual temperature, and a temperature responsive resistor R2 provides a corresponding electrical indication of the actual temperature. The two resistors R1 and R2 are connected in series in one arm of a bridge circuit 31 having resistors R3, R4, and R5 as its other 3 arms. This bridge 31 feeds an amplifier A1 in a thermostat circuit unit 35. The amplifier produces a 0 or 1 output depending on whether the actual temperature is above or below the desired temperature, and this binary signal is fed via a regulator circuit 39 and a relay (coil 42 and contact 43) to a furnace or other temperature conditioning apparatus 12.

Of course, appropriate modifications are made if the system is used to control an air conditioning plant for cooling purposes. The circuit unit 35 includes a control switch 21 with 3 positions, heating, off, and cooling and which operates in conventional manner to produce the required modifications in signal processing.

The circuit unit 35 also includes an anticipation circuit 51, which is coupled back to the bridge 31 via a resistor R6 and operates in conventional manner. This causes the bridge output (net signal to A1) to follow a triangular waveform, cycling the output of A1 with a duty ratio corresponding to the difference between the actual and desired temperatures, so that the time constant of the system response is shortened and the temperature swings reduced in amplitude.

It will be seen that the lower end of resistor R3 is not connected directly to the lower reference rail of the bridge circuit 31 at earth, but to the circuit 35, which normally completes the connection to earth. Hence the bridge normally comprises resistors R1 to R5 as described above. However, a further resistor R7 is connected between the lower end of resistor R3 and earth, and resistor R7 is stepwise variable by means of a manually adjustable control device 22.

The device 22 provides a set-back temperature, and comes into effect when the circuit 35 enters a set-back mode. In this mode, circuit 35 no longer connects the lower end of resistor R3 to earth. If the set-back device 22 is set to a set-back of 0°, the resistance of R7 is 0, and the bridge is unaffected by the change of mode. However, if a non-zero set-back is set by device 22, resistor R7 will have a non-zero value, and the bridge balance point will be changed so that balance will be achieved when the actual temperature (as measured by resistor R2) differs from the set-point temperature (as set by resistor R1) by the set-back temperature values set by resistor R7.

The circuit 35 also has 3 switches 23 to 25 feeding it, and drives a light emitting diode 30. The functions of the switches 23 to 25 are briefly defined as S — set, C — charge (over-ride) and R — review.

The thermostat is designed so as to permit a set-back period to be set into it with extreme ease. The way in which the thermostat is utilized for this purpose is as follows. In the late evening, at the time when the user wants the set-back period to start, the S button is pressed. After a pause of around 3 s, the LED 30 starts to flash at the rate of 1 Hz. The user counts the number of flashes, and holds the S button down until the number of

flashes reaches the number of hours desired for the set-back period. Thus if the set-back is being entered at 11 p.m. and an 8 hour set-back period is required, the button S will be held pressed until 8 flashes have occurred. The set-back period starts immediately the S button is pressed, and continues for the number of hours set in; that is, in this example, until 7 a.m. the next morning. With a set-back temperature of 9°, the house will be kept at 9° below the temperature set by the set-point device 13 until 7 a.m., and will be heated up to the actual set-point temperature then be held at the actual set-point temperature during the day. (Of course, the user must allow for the time taken to bring the temperature up to the set value when the set-back period ends.) The thermostat then operates on a 24-hour cycle, and the set-back period will repeat daily until a fresh set-back program is entered. Pressing the S button automatically clears any existing set-back program in the initial 3 s.

The R button allows the length of the set-back period to be reviewed. Pressing the R button results in the LED 30 flashing, at 1 Hz, with as many flashes as there are hours programmed for the set-back period. This review may be made at any time, without affecting either the length of the set-back program or the time at which it starts.

The C button allows the set-back program to be overridden without affecting the stored set-back program. Each time the C button is pressed, the system changes mode (from set-back mode to normal mode or vice versa), and stays in the new mode until the next programmed change of mode. Thus if the C button is pressed at 10 p.m., the set-back mode will be entered immediately. At 11 p.m., the set-back program calls for a change of mode, and the system then enters the mode called for by the set-back program — that is, it remains in the set-back mode since the set-back program calls for the set-back mode at 11 p.m. Similarly, the set-back mode can be ended early by the C button, or a set-back period can be entered at say 1 p.m. and ended at say 5 p.m. by pressing the C button at 1 p.m. and again at 5 p.m.

As noted, the LED 30 flashes to indicate the number of hours of set-back during setting (by the S button) or review (by the R button). At all other times, the LED 30 indicates whether or not the system is in the set-back mode, being lit for the set-back mode and extinguished for the normal mode.

It is possible to have two periods of set-back a day, but this requires the set-back mode to be programmed in twice a day. Thus although two set-back programs are programmed each day, the programming of each cancels the previous programming of the other.

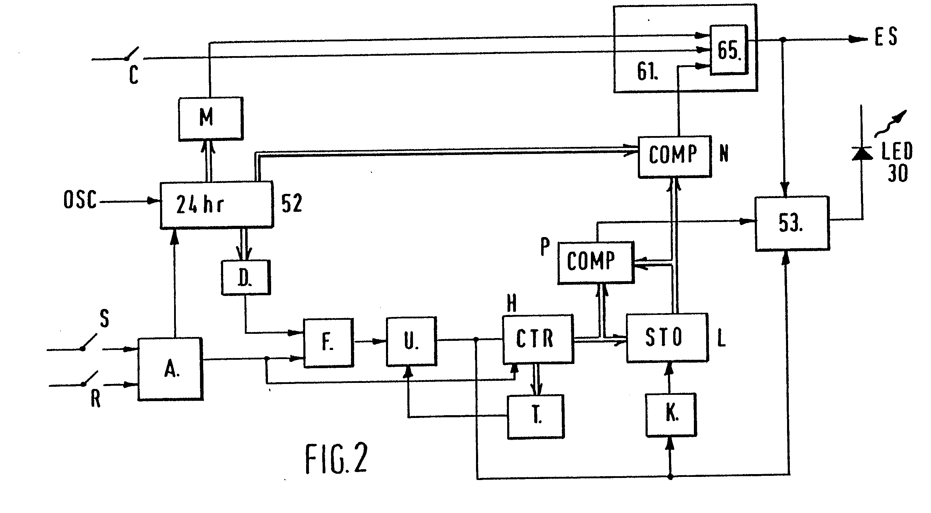

Figure 2 shows, in simplified and diagrammatic form, the circuitry for providing the energy saving function. An oscillator (not shown) drives a 24-hour timer circuit 52, which comprises a divider chain. The Set button S drives a circuit A, which eliminates contact bounce, etc., and provides a reset pulse to the 24-hour timer circuit 52 to reset it to zero. A decoder D decodes a 1 Hz and a 2 Hz output from the timer 52 to provide a sequence of 1 Hz pulses, each 0.25 s long. This stream of pulses is fed to a circuit F, which is enabled from circuit A when button S is pressed to start passing the stream of pulses from circuit D. Circuit F also includes a delay device which inserts a long pulse, of about 3 s, at the start of the stream of pulses passing through.

A 4-bit counter H is used to count the number of pulses appearing from circuit F. The count of counter H is decoded by a decoder T, which detects when the maximum count of 15 is reached. Decoder T enables an AND circuit U through which the pulses from circuit F pass to reach counter H, so that the counter H is thereby prevented from counting past its maximum and recycling to zero. The output from circuit A to circuit F is also fed direct to the reset input of counter H to reset it initially so that it can count the pulses from circuit F correctly.

The stream of pulses fed to counter H from circuit F is also fed to an LED 30 driver circuit 53, to cause the LED 30 to flash in synchronism with the counting of counter H.

A circuit K detects when the pulse stream to counter H ends, and enables a storage circuit L so as to transfer the count from counter H into storage circuit L.

An energy saving circuit 61 includes a flip-flop 65 the state of which determines whether or not the system is in the energy saving mode. Flip-flop 65 determines whether or not the upper end of resistor R7 (Figure 1) is connected to earth, as already discussed. The 24-hour timer 52 drives a decoder circuit M which detects when the timer 52 passes through zero, and the output of circuit M is coupled to circuit 61 to set flip-flop 65, since the energy saving period starts at the setting to zero of the timer 52 and at the 24-hour anniversaries thereof. The timer 52 and the storage circuit L feed a comparator circuit N, which decodes the hours from timer 52 and compares that value with the stored value in storage circuit L of the number of hours of energy saving required. As soon as equality is reached, comparator N feeds a signal to the energy saving circuit 61 to reset flip-flop 65 and thereby terminate the energy saving mode.

The flip-flop 65 also drives the LED driver circuit 53, ensuring that the LED 30 is lit when the system is in the energy saving mode.

The change button C is coupled to the energy saving circuit 65 so that pressing it changes the state of flip-flop 65.

The review button R is coupled to the circuit A, and pressing button R causes circuit A to enable circuit F but not to reset the 24-hour timer circuit 52. The stream of 1 Hz pulses from circuit D is fed via circuits F and U to the counter H. Circuit K is however inhibited at this time (by a link, not shown, from buttons R and S) so that the stored count in storage circuit L is not changed. The counter H and the storage circuit L feed a comparator P, which provides an enabling signal to the LED driver circuit 53 for as long as the count in counter H is less than the stored count in storage circuit L. Driver 53 responds to this enabling signal, when the button R is being pressed, by allowing the pulses from circuit D (via circuits F and U) to pass until the enabling signal ends. Thus the LED will be flashed by the number of hours stored in the storage circuit L.

**Claims**

1. A thermostat controller for a temperature control system, comprising a temperature sensor (20, R2), means for setting a desired temperature (13, R1), circuitry (31, A1, 35) responsive to the difference between the actual and desired temperature to control heating or cooling means accordingly, and timer means (35) settable to provide a set-back of the desired temperature for a predetermined daily interval, characterized in that the timer means comprises: a set control button (S, 23) operable to produce a series of pulses which are fed to set-back accumulator means; a 24-hour timer (52) which is reset by the set control button; and means (LED 30) for audibly or visually indicating the number of pulses being stored when the set control button (S, 23) is pressed.

2. A thermostat controller according to Claim 1, characterized by circuitry (A, F) which provides an initial long pulse in the pulse train gated into the set-back period storage means.

3. A thermostat controller according to either of Claims 1 and 2, characterized in that the indicator means is an indicator light (LED 30) which flashes as the desired count is being set into the set-back period storage means.

4. A thermostat controller according to any one of Claims 1 to 3, characterized by a review button (R) and circuitry (A, P) responsive to the pressing of the review button to signal on the indicator means the number of pulses stored without affecting the operation of the set-back control.

5. A thermostat controller according to any one of Claims 1 to 4, characterized by a change button (C) operable to change the state of the controller (from set-back to normal or vice versa, flip-flop 65) over-riding the timer means until the next change called for by the timer means.

**Patentansprüche**

1. Thermostatsteuergerät für ein Temperatursteuersystem mit einem Temperatursensor (20, R2), einer Einrichtung zum Setzen einer gewünschten Temperatur (13, R1), einer Schaltungsanordnung (31, A1, 35), die auf die Differenz zwischen der tatsächlichen und der gewünschten Temperatur reagiert, um entsprechend Heizungsoder Kühleinrichtungen zu steuern, und einer Zeitgebereinrichtung (35), die setzbar ist, um ein Rücksetzen der gewünschten Temperatur für ein vorbestimmtes tägliches Intervall vorzusehen, dadurch gekennzeichnet, daß die Zeitgebereinrichtung aufweist:

einen Setzsteuerknopf (S23), der betätigbar ist, um eine Reihe von Impulsen zu erzeugen, die einer Rücksetz-Ansammeleinrichtung zugeführt werden; einen 24-Stunden Zeitgeber (52), der rückgesetzt wird durch den Setzsteuerknopf und einer Einrichtung (LED 30) zum hörbaren oder sichtbaren Anzeigen der Anzahl von Impulsen, die gespeichert sind, wenn der Setzsteuerknopf (S23) gedrückt ist.

2. Thermostatsteuergerät nach Anspruch 1, gekennzeichnet durch eine Schaltungsanordnung (A, F), die einen Anfangslangimpuls in dem Impulszug liefert, der in die Rücksetz-Perioden-Speichereinrichtung durchgelassen wird.

3. Thermostatsteuergerät nach einem der Ansprüche 1 und 2, dadurch gekennzeichnet, daß die Anzeigeeinrichtung ein Anzeigelicht (LED 30) ist, das aufleuchtet, wenn die gewünschte Zählung in die Rücksetz-Perioden-Speichereinrichtung gesetzt wird.

4. Thermostatsteuergerät nach einem der Ansprüche 1 bis 3, gekennzeichnet durch einen Überprüfungsknopf (R) und eine Schaltungsanordnung (A, P), die auf das Drücken des Überprüfungsknopfes reagiert, um auf der Anzeigeeinrichtung die Anzahl der gespeicherten Impulse anzuzeigen, ohne die Betriebsweise der Rücksetz-Steuerung zu beeinflussen.

5. Thermostatsteuergerät nach einem der Ansprüche 1 bis 4, gekennzeichnet durch einen Wechselknopf (C), der betreibbar ist, um den Zustand des Steuergerätes (von Rücksetzzu Normal oder umgekehrt, Flip-Flop 65) zu ändern, der die Zeitgebereinrichtung überschreibt bis der nächste Wechsel durch die Zeitgebereinrichtung gerufen wird.

**Revendications**

1. Régulateur à thermostat pour un système de régulation de température comprenant un détecteur de température (20, R2), un moyen pour établir une température désirée (13, R1), un circuit (31, A1, 35) agissant en réponse à la différence entre les températures réelles et souhaitées pour commander en conséquence un moyen de chauffage ou de refroidissement, et un moyen temporisateur (35) réglable pour fournir une réduction de la température désirée sur un intervalle journalier prédéterminé, caractérisé en ce que le moyen temporisateur comprend: un bouton de commande de réglage (S, 23) actionnable pour produire une série d'impulsions qui sont fournies à un moyen accumulateur de réduction; un temporisateur sur 24 heures (52) qui est remis à zéro par le bouton de commande de réglage; et un moyen (LED 30) pour indiquer de façon audible ou visible le nombre d'impulsions mémorisées, quand le bouton de commande de réglage (S, 23) est pressé.

2. Régulateur à thermostat selon la revendication 1, caractérisé par un circuit (A, F) qui fournit une impulsion initiale longue dans le train d'impulsions introduit dans le moyen de mémorisation de période de réduction.

3. Régulateur à thermostat selon l'une des revendications 1 ou 2, caractérisé en ce que le moyen indicateur est un voyant indicateur (LED 30) qui clignote quand le comptage souhaité est établi dans le moyen de mémorisation de période de réduction.

4. Régulateur à thermostat selon l'une quelconque des revendications 1 à 3, caractérisé par un bouton de vérification (R) et un circuit (A, F) agissant en réponse à la pression du bouton de vérification pour signaler sur le moyen indicateur le nombre d'impulsions mémorisées sans affecter l'opération de commande de réduction.

5. Régulateur à thermostat selon l'une quelconque des revendications 1 à 4, caractérisé par un bouton de modification (C) actionnable pour modifier l'état du régulateur (de l'état de réduction à l'état normal ou inversement, bascule 65) prioritairement par rapport au moyen de temporisation jusqu'au changement suivant demandé par le moyen de temporisation.

FIG.1

0 049 626

FIG.2

0 049 626